# EUROPEAN PATENT SPECIFICATION

(11) **EP 3 287 745 B1**
(45) Date of publication and mention of the grant of the patent: **03.01.2024**
(21) Application number: 17187888.7
(22) Date of filing: 25.08.2017
(51) Int. Cl.: G01C 21/34, G01C 21/36

(54) **INFORMATION INTERACTION METHOD AND DEVICE**
VERFAHREN UND VORRICHTUNG ZUR INFORMATIONSINTERAKTION
PROCÉDÉ ET DISPOSITIF D'INTERACTION D'INFORMATIONS

(30) Priority: 25.08.2016 CN 201610728291
(43) Date of publication of application: 28.02.2018
(73) Proprietor: Beijing Xiaomi Mobile Software Co., Ltd., Beijing 100085 (CN)
(72) Inventor: XIE, Yan, Haidian District, Beijing 100085 (CN); CHENG, Yue, Haidian District, Beijing 100085 (CN); WAN, Longxiang, Haidian District, Beijing 100085 (CN)
(74) Representative: Sadler, Peter Frederick

(56) References cited:
- EP-A1- 2 333 486
- EP-A2- 2 015 027
- EP-A2- 2 393 265
- EP-A2- 2 395 326
- Raúl Rosso: "How to share locations on WhatsApp", , 24 March 2015 (2015-03-24), XP055440428, Retrieved from the Internet: URL:https://blog.en.uptodown.com/share-loc ations-whatsapp/ [retrieved on 2018-01-12]

## Description

### TECHNICAL FIELD

The present disclosure generally relates to the technical field of the Internet, and particularly to an information interaction method and device, and more particularly to a method and system of enabling a meeting between a first party and a second party at a destination location, a computer program and a recording medium.

### BACKGROUND

Two meeting parties may usually determine a fuzzy, or approximate, meeting location when determining where to meet. Such a meeting location may not be accurate enough to allow the parties to meet easily. For example, the parties may determine to meet at Tiananmen Square, but Tiananmen Square is actually subdivided into regions such as the Monument to the People's Heroes, the Tiananmen Rostrum, the Mausoleum of Mao Zedong and the like. In such a scenario, it is well known that the two meeting parties may usually meet after considerable difficulty since the specified meeting area is relatively large or complex and they may be unfamiliar with it. This wastes a lot of time. Therefore, there is an urgent demand for an information interaction method for enabling two meeting parties to rapidly meet at a predetermined meeting place.
EP2333486 discloses a device for presenting identification information of a sender in such a manner that the identification information is easily understood by a user to determine who the information relates to. EP2395326 relates to a method for guiding a route by using augmented reality and a mobile terminal using the same to display real time route guidance. EP2393265 discloses a mobile terminal for calculating position information of a designated destination object and transmitting this to a counterpart terminal. EP2015027 discloses a remote entry navigation system which streamlines a navigation process by generating routing directions to a destination transmitted by a mobile position identification unit. Raul Rosso: "How to share locations on WhatsApp", 24 March 2015 (2015-03-24), XP055440428 discloses a method for sharing specified locations on WhatsApp for Android devices and desktop computers.

### SUMMARY

Accordingly, the present invention provides a method and system of enabling a meeting between a first party and a second party at a destination location, a computer program and a recording medium, in accordance with the appended claims.

According to a first aspect, a method of enabling a meeting between a first party and a second party at a destination location is provided in claim 1.

According to the first aspect, when the destination is acquired, a terminal automatically displays the real scene picture of the destination landmark and send the real scene picture of the destination landmark to the other meeting party. In such a manner, one meeting party may receive the real scene picture of the destination landmark sent by the other meeting party before the two meeting parties meet or in a meeting process. As such, the two meeting parties may rapidly meet at a predetermined meeting place, and high intelligence and high user stickiness are achieved.

According to a particular embodiment, acquiring the destination includes: receiving an input from the first party, or querying a chatting record of the first party to identify the destination in appointment information.

According to a particular embodiment, the method further includes: acquiring a geographical origin of the first party, and planning route information from the geographical origin to the destination landmark; estimating travel time for travelling to the destination landmark according to the route information; calculating a departure time for the user according to a set meeting time and the travel time; and displaying departure prompting information at the departure time, and starting route navigation to the destination landmark.

According to a second aspect, a user terminal configured to enable a meeting between a first party and a second party at a destination location is provided in claim 4.

According to a particular embodiment, an acquisition module is configured to receive an input from the first party, or query a chatting record of the first party to identify the destination in appointment information.

According to a particular embodiment, the user terminal further includes: a planning module, a calculation module, a starting module, wherein the acquisition module is further configured to acquire a geographical origin of the first party; the planning module is configured to plan route information from the geographical origin to the destination landmark; the calculation module is configured to estimate travel time for travelling to the destination landmark according to the route information; wherein the calculation module is further configured to calculate a departure time for the first party according to a set meeting time and the travel time; the display module is further configured to display departure prompting information at the departure time; and the starting module is configured to start route navigation to the destination landmark.

According to the second aspect, when the destination is acquired, a terminal automatically displays the real scene picture of the destination landmark and sends the real scene picture of the destination landmark to the other meeting party. In such a manner, one meeting party receives the real scene picture of the destination landmark sent by the other meeting party before the two meeting parties meet or in a meeting process. As such, the two meeting parties may rapidly meet at a predetermined meeting place, and high intelligence and high user stickiness are achieved.

According to a third aspect not being part of the invention, the invention relates to an information interaction device, including: a processor; and a memory configured to store an instruction executable for the processor, wherein the processor is configured to: acquire a destination; display a real scene picture of a destination landmark; and send the real scene picture of the destination landmark to a specified friend.

According to the third aspect, when the destination is acquired, a terminal may automatically display the real scene picture of the destination landmark and send the real scene picture of the destination landmark to the other meeting party. In such a manner, one meeting party may receive the real scene picture of the destination landmark sent by the other meeting party before the two meeting parties meet or in a meeting process. As such, the two meeting parties may rapidly meet at a predetermined meeting place, and high intelligence and high user stickiness are achieved.

It is to be understood that the above general descriptions and detailed descriptions below are only exemplary and explanatory and not intended to limit the present disclosure.

### BRIEF DESCRIPTION OF THE DRAWINGS

The accompanying drawings, which are incorporated in and constitute a part of this specification, illustrate embodiments consistent with the present disclosure, and serve to explain the principles of the present disclosure in conjunction with the description.
Fig. 1 is a flow chart showing an information interaction method according to an exemplary embodiment.
Fig. 2A is a flow chart showing an information interaction method according to an exemplary embodiment.
Fig. 2B is a schematic diagram illustrating a terminal according to an exemplary embodiment.
Fig. 2C is a schematic diagram illustrating a terminal according to an exemplary embodiment not being part of the invention.
Fig. 2D is a schematic diagram illustrating selection of a real scene picture according to an exemplary embodiment.
Fig. 2E is a schematic diagram illustrating a terminal according to an exemplary embodiment not being part of the invention.
Fig. 2F is a schematic diagram illustrating a terminal according to an exemplary embodiment.
Fig. 3 is a block diagram of an information interaction device according to an exemplary embodiment.
Fig. 4 is a block diagram of an information interaction device according to an exemplary embodiment.
Fig. 5 is a block diagram of an information interaction device according to an exemplary embodiment.

### DETAILED DESCRIPTION

Exemplary embodiments will be described in detail below. Examples of the exemplary embodiments are illustrated in the accompanying drawings. The following description refers to the accompanying drawings in which the same references in different drawings represent the same or similar elements unless otherwise specified. The implementations set forth in the following description of exemplary embodiments do not represent all implementations consistent with the present disclosure. Instead, they are merely examples of apparatuses and methods consistent with some aspects of the present disclosure as recited in the appended claims.

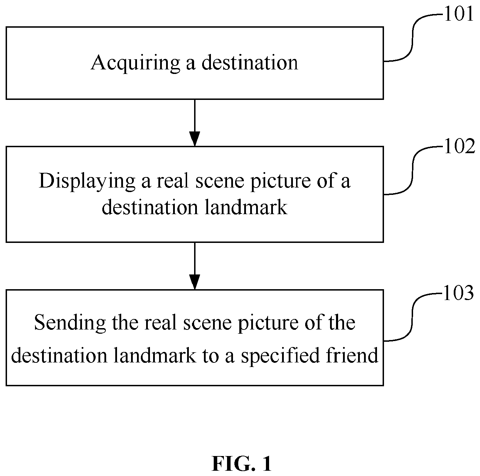

Fig. 1 is a flow chart showing an information interaction method according to an exemplary embodiment. As shown in Fig. 1, the method is applied to a terminal, and includes the following steps.

In Step 101, a destination is acquired.

In Step 102, a real scene picture, (e.g. an image or photograph) of a destination landmark is displayed.

In Step 103, the real scene picture of the destination landmark is sent to a specified friend.

According to the method provided by the embodiment of the present disclosure, after acquiring the destination, the terminal automatically displays the real scene picture of the destination landmark and sends the real scene picture of the destination landmark to the other meeting party. In such a manner, one meeting party can receive the real scene picture of the destination landmark sent by the other meeting party before the two meeting parties meet or are in the process of meeting, so that the two meeting parties can rapidly meet at a predetermined meeting place.

The real scene picture of the destination landmark includes a navigation link which is configured for navigation to the destination landmark after the specified friend receives and clicks the real scene picture of the destination landmark.

Optionally, acquiring the destination includes:
receiving an input from a user specifying the destination, or
querying a chatting record, e.g. a record of user messages, of the user to identify the destination in appointment information.

Displaying the real scene picture of the destination landmark includes:
selecting a prominent building as the destination landmark, the building being located within a preset geographical range and the building being selected according to each of a building height, a building area, a building color, a building photographing popularity and a network search popularity; and
acquiring the real scene picture of the destination landmark over a network and displaying the real scene picture.

Selecting the prominent building as the destination landmark according to one or more of the building height, the building area, the building color, the building photographing popularity and the network search popularity includes:
generating a building candidate according to each of more than one of the building height, the building area, the building color, the building photographing popularity and the network search popularity and displaying the building candidate, and receiving a selection instruction from the user to determine the destination landmark; or
comprehensively performing a calculation to automatically obtain the destination landmark according to the building height, the building area, the building color, the building photographing popularity and the network search popularity.

Optionally, the method may include:
acquiring a geographical origin of the user, and planning route information from the geographical origin to the destination landmark;
estimating time of travel for travelling to the destination landmark according to the route information;
calculating a departure time for the user according to a set meeting time and the time of travel; and
displaying departure prompting information at the departure time, and starting route navigation to the destination landmark.

All of the abovementioned optional technical solutions may be freely combined, which will not be elaborated one by one herein.

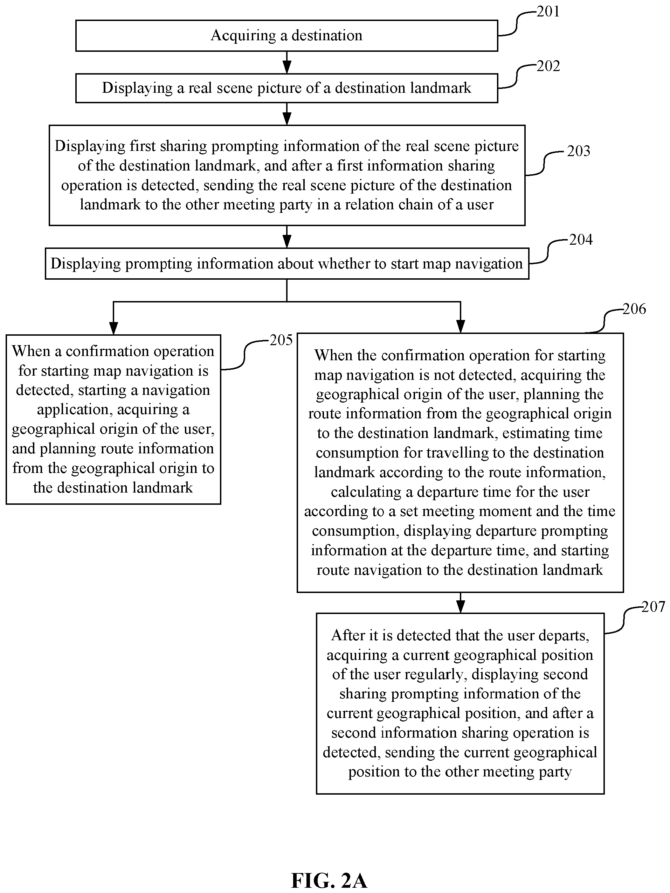

Fig. 2A is a flow chart showing an information interaction method according to an exemplary embodiment. As shown in Fig. 2A, the method includes the following steps.

In Step 201, a destination is acquired.

In the embodiment of the present disclosure, acquisition of the destination may be implemented in at least the following two manners.

In a first manner, an input is received from a user.

For the first manner, for example, after two meeting parties verbally determine a meeting place, one meeting party may input a destination through a search input box provided by a navigation application, map application, or similar to determine route information to the destination, and then a terminal may acquire information, input by the user, about the destination.

In a second manner, a chatting record, e.g. a messaging history, of the user is queried to identify the destination in appointment information.

For the second manner, people often communicate using an instant messaging application, and the two meeting parties are also likely to determine a meeting place through the instant messaging application. In such cases, the information about the destination may be acquired by querying the chat/message record/history of the user. The appointment information mentioned above refers to interaction information sent when the two meeting parties determine the meeting place, the appointment information being information that identifies the meeting place. The appointment information may include, but is not limited to, information of a picture form (e.g. a photograph), a voice form, a text form, a link of an image-text form or the like. For example, location information appearing in the appointment information is identified, and the identified location specified by the location information is determined as the destination. Alternatively, if multiple pieces of location information are identified in the appointment information, the multiple pieces of location information are displayed to the user who may select a location as the destination. In another example the appointment information is an image or photograph and, after a clicking operation of the user over the picture is received, a building in the picture is automatically identified and the navigation application is started. The building in the picture is set as a navigation termination point, i.e. the destination.

In Step 202, a real scene picture, or photograph, of a destination landmark is displayed.

Here, the destination landmark refers to a popular or prominent building which is located within a predetermined range associated with the destination location and that is representative and familiar to people. For example, destination landmarks of Beijing include the Imperial Palace, the Bird's Nest, the Water Cube and the like. Displaying of the real scene picture, or photograph, of the destination landmark is implemented by selecting a prominent building as the destination landmark, the building being located within a preset geographical range in relation to the destination location and the building being selected according to the properties of the building, including each of a building height, a building area, a building color, a building photographing popularity and a network search popularity, and acquiring the real scene picture, or photograph, of the destination landmark over a network and displaying the real scene picture.

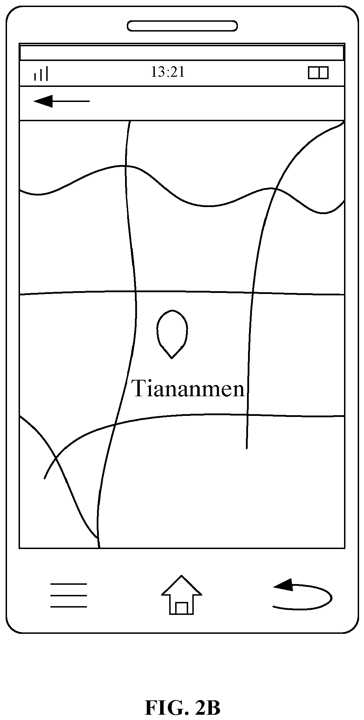

Here, the preset geographical range refers to a certain geographical range in the vicinity of the destination location. The preset range may be determined by a server, or automatically determined by the terminal. As shown in Fig. 2B, after the user determines the destination through the navigation application, the terminal sends position information of the destination to the server, and then the server determines the preset range according to the position information of the destination and stored map data. For example, if the meeting place is determined to be Tiananmen Square, it is well known that Tiananmen Square occupies a very large area and includes numerous buildings. Thus, such a meeting place is very general and not very accurate, and difficulties in meeting of the two meeting parties are greatly increased. In general, the preset range may be determined by applying an area of a particular size to the destination location. The preset range area size may be predetermined. The present range size may be the same for all locations. Alternatively the preset range area size may vary for different locations and may be determined based upon the size or expanse of the destination location. For example, the preset range area size may be proportional to the size or expanse of the destination location. The present range may be a regular shape (e.g. a circle), centered on the geographical center of the destination location, or on a particular building associated with the destination location. For example, the server may determine a circumference of 1.5km or a larger region centered on the Monument to the People's Heroes as the preset range to cover the whole of Tiananmen Square, or as much of this location as possible. Correspondingly, as another example, if a fitness center is determined as the destination, a circumference of hundreds of meters (or a larger region, but a region that has a circumference smaller than 1.5km) centered on the fitness center is determined as the preset range because the fitness center covers a smaller area than Tiananmen Square, and so a smaller preset range area size is required. The terminal may independently determine the preset range according to the destination and stored offline map data in a similar manner, which will not be specifically limited in the present disclosure.

Determination of the destination landmark within the preset range is implemented according to the building height, the building area, the building color, the building photographing popularity and the network search popularity within the preset range. All of these parameters are taken into account, with each parameter being scored and appropriate weightings being applied to each parameter to determine one or more destination landmarks within the required area range.

Generally, a relatively taller building, or a building occupying a relatively larger area or a building in a relatively more striking color may attract attentions of people more easily. Therefore, the abovementioned factors are adopted as determination conditions for the destination landmark in the present disclosure. In particular, a database containing details on building height, building area or footprint, and/or building color for buildings associated with particular locations may be maintained, e.g. using big data techniques, and consulted to determine the appropriate destination landmark. In particular, the tallest building, and/or the building with the largest area, may be selected as the destination landmark. In addition, or alternatively, buildings of a color that matches one or more predetermined colors may be selected. In particular: taller buildings may be assigned a higher score than shorter buildings; buildings having a larger footprint or area may be assigned a higher score than buildings having a smaller footprint or area; and/or buildings may be assigned scores according to their color.

The building photographing popularity may be measured by the number of photos taken by people that include the building. The building photographing popularity may be determined based on a determination of the number of photographs uploaded to one or more social media websites, or similar website, or stored in a cloud based storage system, that feature the building, this being determined by performing image recognition on the photos to identify the building, and/or by relying on the users tagging the building in the photo. When a photographing popularity of a building is relatively high, it is indicated that a probability that the building is familiar to people is higher, so that the building photographing popularity is adopted as a determination condition for the destination landmark. The building photographing popularity may be determined based on, for example, whether: the number of photographs featuring the building is over a predetermined threshold number; more than a predetermined proportion of photographs taken at the destination feature the building; or the number of photographs taken at the location that feature the building is higher than the number of photographs that feature other buildings in the same location. A score may be assigned to buildings based upon the number of times a photo in which it features is detected as described above.

The network search popularity is similar to the building photographing popularity. Here, the network search popularity may be measured by a number of times for which the building is searched for, using one or more internet search engines. When the number of times for which the building is searched for is high, it is indicated that a probability that the building is familiar to people, and so can function as a landmark is high. The network search popularity may be determined based on, for example, whether: the number of times the building is searched for is over a predetermined threshold number; or the number of searches for the building is higher than the number of searches for other buildings in the same location. Again, a score may be assigned to buildings based upon the number of times for which it has been searched for. Thus, the network search popularity may also be adopted as a determination condition for the destination landmark.

Selection of the prominent building as the destination landmark is implemented in the following two manners.

In a first manner not being part of the invention, a building candidate is generated and displayed according to each of more than one of the building height, the building area, the building color, the building photographing popularity and the network search popularity, and a selection instruction is received from the user to determine the destination landmark.

For the first manner, multiple building candidates may be generated according to more than one of the building height, the building area, the building color, the building photographing popularity and the network search popularity, and the multiple building candidates are displayed to the user. The user may determine the particular combination of parameters that are used to determine candidate buildings. The user determines the destination landmark from the multiple building candidates.

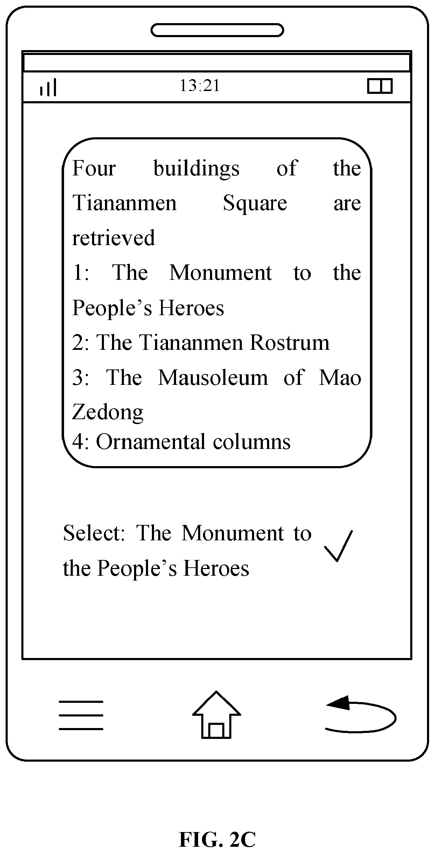

For example, a building candidate is generated according to the building height, the building area and the building color, or a building candidate is generated according to the building area, the building color and the building photographing popularity, or a building candidate is generated according to the building color, the building photographing popularity and the network search popularity. The multiple factors may be combined in any manner, such as using the weightings described above, and which will not be specifically limited in the present disclosure. After the multiple building candidates are generated, as shown in Fig. 2C not being part of the invention, the terminal may display identification information of the multiple building candidates. For example, the Monument to the People's Heroes, the Tiananmen Rostrum, the Mausoleum of Mao Zedong, ornamental columns and the like are displayed. When a selection operation of the user over the identification information of any building candidate is detected, the terminal determines the building candidate indicated by the selected identification information as the determination landmark. For example, the Monument to the People's Heroes is determined as the destination landmark.

In a second manner, the destination landmark is obtained by comprehensively performing a calculation according to all the relevant parameters (the building height, the building area, the building color, the building photographing popularity and the network search popularity). This allows automatic determination of landmark candidates.

For the second manner, the terminal independently and directly performs a comprehensive calculation to obtain the destination landmark according to the building height, the building area, the building color, the building photographing popularity and the network search popularity, without selection performed by the user. When calculating the destination landmark, a weight may be assigned to each factor as mentioned above. A relatively higher weight is assigned to the factor with relatively greater influence on a calculation result, and a relatively lower weight is assigned to the factor with relatively less influence on the calculation result. For example, the building color may have greater influence than the building area, so that the weight corresponding to the building color is higher than the weight corresponding to the building area. Here, each factor may be obtained in the manners described above, and/or by the application of big data methods and statistics, which will not be specifically limited in the embodiment of the present disclosure.

It is to be noted that the destination landmark may be independently determined by the terminal, or determined with assistance of the server. When the destination is acquired, the terminal sends the position information of the destination to the server, and then the server determines the destination landmark by adopting a similar determination manner as described above, which will also not be specifically limited in the present disclosure.

Acquisition of the real scene picture of the destination landmark also adopts the following two manners.

In a first manner, the terminal acquires a picture of the destination landmark from the server, and determines this network obtained picture as the real scene picture of the destination landmark.

For the first manner, the terminal needs to upload identification information of the destination landmark to the server. When the identification information is received, the server may select a representative real scene picture as the real scene picture of the destination landmark according to the following rule. The real scene picture may provide a particular viewing angle of the destination landmark, and the real scene picture may be selected based upon the number of images captured of each of a variety of views of the destination landmark. The view having the largest number of associated images may be selected, and the real scene picture may be taken from that set of images. The images corresponding to respective views may be determined by performing image recognition to determine similarities between images of a given building. The images, or image data, may be obtained via upload to one or more social media sites, or stored in a cloud based storage system.

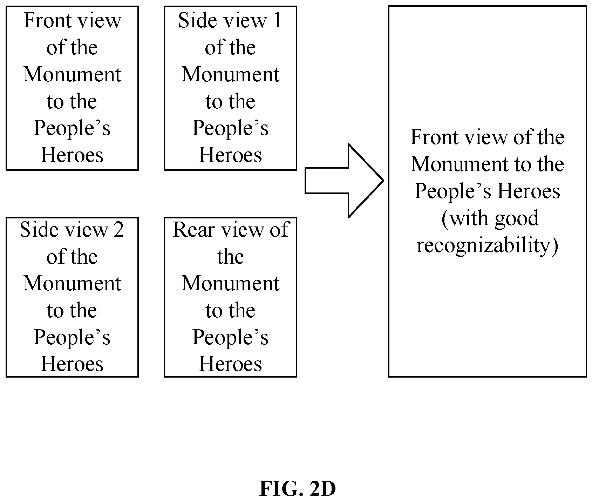

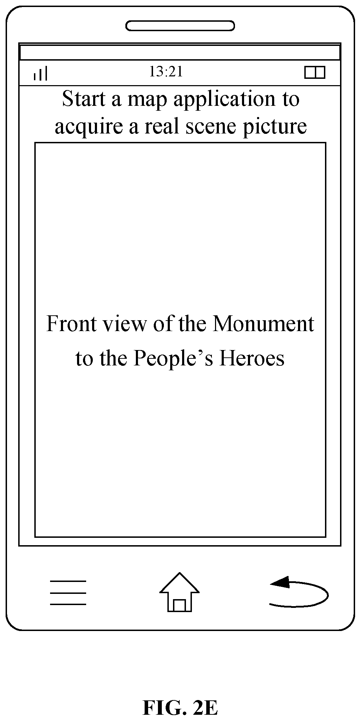

For example, when a destination landmark occupies a very large area, the destination landmark may include multiple gates, or a size of each side of the landmark is very large. Therefore, it is also necessary to select a picture with a relatively high identification degree from multiple real scene pictures, as shown in Fig. 2D. For example, the server obtains photos shot by other users at the destination landmark by big data methods and statistics, and obtains a picture with most shooting angles, or at a most obvious place or with a good recognizability as the real scene picture of the destination landmark by performing a calculation and analysis of the photos. For example, a front picture of the destination landmark is selected as the real scene picture of the destination landmark, as shown in Fig. 2E.

In a second manner not being part of the invention, the terminal acquires a real scene map picture through the navigation application, and acquires the real scene picture of the destination landmark from the real scene map picture according to the destination landmark.

For the second manner, after starting the navigation application, the terminal acquires the real scene map picture from the locally stored offline map data at first. The terminal then searches the real scene map picture for the real scene picture of the destination landmark shown in Fig. 2E according to the identification information of the destination landmark. When searching the real scene picture, also, a picture with a relatively higher recognizability will be selected. For example, a front real scene picture of the Monument to the People's Heroes is selected. The real scene picture having a higher recognizability may be determined in the same manner as for the first manner above.

In addition, in some circumstances, a destination may be at a certain distance away from a destination landmark. In order to ensure that the other meeting party may rapidly travel to the destination after reaching the vicinity of the destination landmark, in the embodiment of the present disclosure, navigation information from the destination to the destination landmark may also be acquired, and the navigation information is sent to the other meeting party. If one meeting party knows about a geographical position of the other meeting party, navigation information from the geographical position of the other meeting party to the destination landmark may also be acquired, which will not be specifically limited in the embodiment of the present disclosure. Here, the navigation information is contained in the real scene picture of the destination landmark. That is, the real scene picture of the destination landmark includes a navigation link, and after the navigation link is received by the other meeting party, when the other meeting party clicks the real scene picture of the destination landmark, the navigation application is automatically started for navigation to the destination landmark on the basis of the navigation link.

In Step 203, first sharing prompting information of the real scene picture of the destination landmark is displayed, and when a first information sharing operation is detected, the real scene picture of the destination landmark is sent to the other meeting party according to a relation chain of the user.

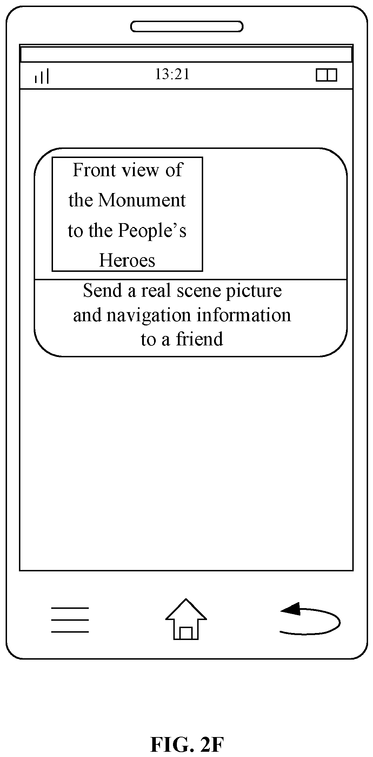

The obtained real scene picture of the destination landmark is sent to the other meeting party through an instant messaging application. Specifically, the first sharing prompting information of the real scene picture of the destination landmark may be displayed, as shown in Fig. 2F. When a clicking operation over the first sharing prompting information is detected, it is determined that a first information sharing operation is detected, the instant messaging application is woken up, or started. When a clicking operation of the user over a sharing button is detected, the terminal displays a relation chain page, or contacts display, of the user for the user to select a party to whom a picture will be sent. After a clicking operation on any contact identifier in the relation chain of the user is detected, the real scene picture of the destination landmark is sent to the other meeting party on the relation chain of the user.

In Step 204, prompting information about whether to start map navigation is displayed. When a confirmation operation for starting map navigation is detected, Step 205 will be executed, and when the confirmation operation for starting map navigation is not detected, Step 206 will be executed.

In an embodiment not being part of the invention, after the real scene picture of the destination landmark is sent to the other meeting party, for enabling the current user to reach the destination landmark, whether to start map navigation may also be prompted to the user. When the user needs to immediately start, map navigation is confirmed to be started. After the navigation application is started, a geographical origin of the user may be automatically determined so as to plan route information from the geographical origin to the destination landmark, and map navigation may be provided for the user by using one or both of an interface display and a voice broadcast. When the user currently needs not to depart at the current time to make the meeting on time, a time when the user should depart may be estimated, and the user may be automatically prompted at the estimated departure time. Details of the procedure will be described in Step 206.

In Step 205, when the confirmation operation for starting map navigation is detected, the navigation application is started, the geographical origin of the user is acquired, and the route information from the geographical origin to the destination landmark is planned.

In Step 206, when the confirmation operation for starting map navigation is not detected, the geographical origin of the user is acquired, the route information from the geographical origin to the destination landmark is planned, travel time for travelling to the destination landmark is estimated according to the route information, the departure time for the user is calculated according to a set meeting time and the travel time, departure prompting information is displayed at the departure time, and route navigation to the destination landmark is started.

Optionally, after the terminal acquires the geographical origin of the user and the set meeting time, if the user selects a travel tool, the terminal may independently estimate the travel time for travelling to the destination landmark according to the route information, calculate the departure time for the user according to the meeting time and the travel time, display the departure prompting information at the departure time and start route navigation for the destination landmark. The travel time is obtained according to factors such as a traffic condition and a weather condition. For example, traffic information and weather information may be acquired, and then the travel time is calculated according to a route. For example, when the meeting time is nine o'clock, if the travel time is an hour by driving, the user may be prompted at eight o' clock to prompt the user to depart right now. Here, the departure prompting information may be voice prompting information or text prompting information, which will not be specifically limited in the present disclosure.

In Step 207, after it is detected that the user has departed, a current geographical position of the user is acquired (for example using standard techniques such as GPS or GNSS), second sharing prompting information of the current geographical position is displayed, and after a second information sharing operation is detected, the current geographical position is sent to the other meeting party.

Optionally, after the user has departed, the navigation application may also regularly acquire the current geographical position of the user. For example, the current geographical position of the user is acquired with a time interval of 5 minutes. The second sharing prompting information of the current geographical position is then displayed. When the user confirms to share the current geographical position, that is, after the terminal detects the second information sharing operation, the current geographical position is sent to the other meeting party through the instant messaging application, such that the other meeting party can timely learn about the current position of the user, thereby estimating an arrival time of the user.

When the destination is acquired, the terminal automatically displays the real scene picture of the destination landmark and sends the real scene picture of the destination landmark to the other meeting party. In such a manner, one meeting party may receive the real scene picture of the destination landmark sent by the other meeting party before the two meeting parties meet or are in a meeting process. As such, the two meeting parties may rapidly meet at a predetermined meeting place.

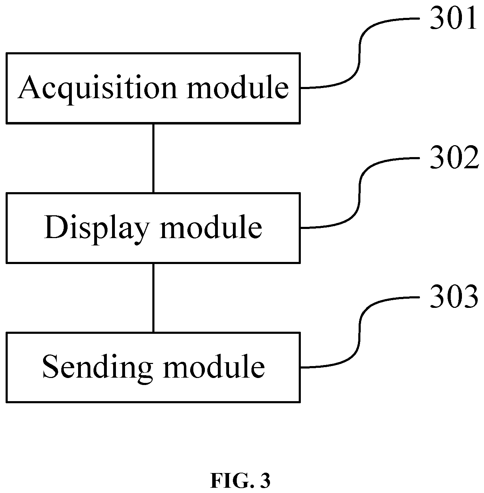

Fig. 3 is a block diagram of a user terminal according to an exemplary embodiment. Referring to Fig. 3, the device includes an acquisition module 301, a display module 302 and a sending module 303.

The acquisition module 301 is configured to acquire a destination.

The display module 302 is configured to display a real scene picture of a destination landmark.

The sending module 303 is configured to send the real scene picture of the destination landmark to a specified friend.

The real scene picture of the destination landmark includes a navigation link. The navigation link is configured for navigation to the destination landmark after the specified friend receives and clicks the real scene picture of the destination landmark.

The acquisition module 301 is configured to receive an input from a user or query a chatting record of the user, so as to identify the destination in appointment information.

The display module 302 is configured to select a prominent building as the destination landmark from a preset range according to one or more of a building height, a building area, a building color, a building photographing popularity and a network search popularity, and acquire the real scene picture of the destination landmark over a network and display the real scene picture.

The display module 302 is configured to generate and display a building candidate according to each of the building height, the building area, the building color, the building photographing popularity and the network search popularity, and receive a selection instruction from the user to determine the destination landmark. The display module 302 is configured to comprehensively perform a calculation to obtain the destination landmark according to the building height, the building area, the building color, the building photographing popularity and the network search popularity.

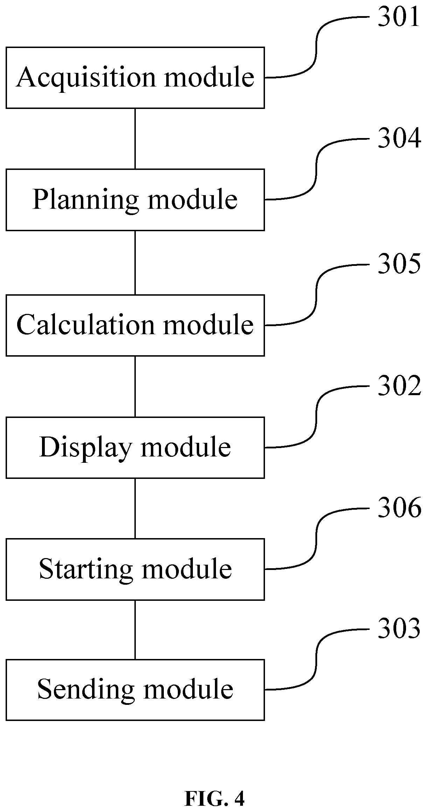

In another embodiment, as shown in Fig. 4, the device further includes a planning module 304, a calculation module 305 and a starting module 306.

The acquisition module 301 is further configured to acquire a geographical origin of the user.

The planning module 304 is configured to plan route information from the geographical origin to the destination landmark.

The calculation module 305 is configured to estimate travel time for travelling to the destination landmark according to the route information.

The calculation module 305 is further configured to calculate a departure time for the user according to a set meeting time and the travel time.

The display module 302 is further configured to display departure prompting information at the departure time.

The starting module 306 is configured to start route navigation to the destination landmark.

According to the user terminal provided by the embodiment of the present disclosure, when the destination is acquired, the terminal will automatically display the real scene picture of the destination landmark and send the real scene picture of the destination landmark to the other meeting party. In such a manner, one meeting party receives the real scene picture of the destination landmark sent by the other meeting party before the two meeting parties meet or are in a meeting process. As such, the two meeting parties may rapidly meet at a predetermined meeting place, and high intelligence and high user stickiness are achieved.

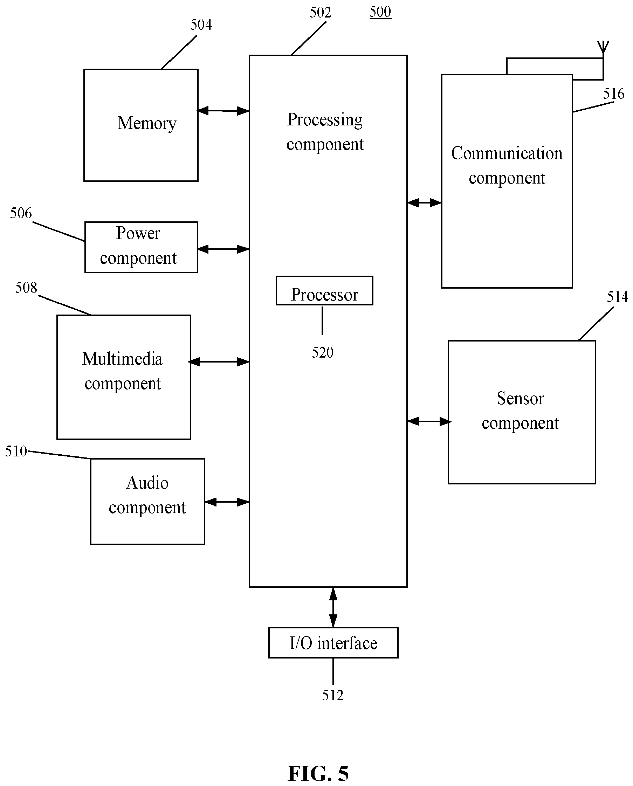

Fig. 5 is a block diagram of an information interaction device 500 according to an exemplary embodiment. For example, the device 500 may be a mobile phone, a computer, a digital broadcast terminal, a messaging device, a gaming console, a tablet, a medical device, exercise equipment, a personal digital assistant or the like.

Referring to Fig. 5, the device 500 may include one or more of a processing component 502, a memory 504, a power component 506, a multimedia component 508, an audio component 510, an Input/Output (I/O) interface 512, a sensor component 514, and a communication component 516.

The processing component 502 typically controls overall operations of the device 500, such as the operations associated with display, telephone calls, data communications, camera operations, and recording operations. The processing component 502 may include one or more processors 520 to execute instructions to perform all or part of the steps in the abovementioned methods. Moreover, the processing component 502 may include one or more modules which facilitate interaction between the processing component 502 and the other components. For instance, the processing component 502 may include a multimedia module to facilitate interaction between the multimedia component 508 and the processing component 502.

The memory 504 is configured to store various types of data to support the operation of the device 500. Examples of such data include instructions for any application or methods operated on the device 500, contact data, phonebook data, messages, pictures, video, etc. The memory 504 may be implemented by any type of volatile or non-volatile memory devices, or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, and a magnetic or optical disk.

The power component 506 provides power for various components of the device 500. The power component 506 may include a power management system, one or more power supplies, and other components associated with the generation, management and distribution of power for the device 500.

The multimedia component 508 includes a screen providing an output interface between the device 500 and a user. In some embodiments, the screen may include a Liquid Crystal Display (LCD) and a Touch Panel (TP). If the screen includes the TP, the screen may be implemented as a touch screen to receive an input signal from the user. The TP includes one or more touch sensors to sense touches, swipes and gestures on the TP. The touch sensors may not only sense a boundary of a touch or swipe action, but also sense a duration and pressure associated with the touch or swipe action. In some embodiments not being part of the invention, the multimedia component 508 includes a front camera and/or a rear camera. The front camera and/or the rear camera may receive external multimedia data when the device 500 is in an operation mode such as a photographing mode or a video mode. Each of the front camera and the rear camera may be a fixed optical lens system or have focusing and optical zooming capabilities.

The audio component 510 is configured to output and/or input an audio signal. For example, the audio component 510 includes a Microphone (MIC), and the MIC is configured to receive an external audio signal when the device 500 is in the operation mode, such as a call mode, a recording mode and a voice recognition mode. The received audio signal may be further stored in the memory 504 or sent through the communication component 516. In some embodiments not being part of the invention, the audio component 510 further includes a speaker configured to output the audio signal.

The I/O interface 512 provides an interface between the processing component 502 and a peripheral interface module, and the peripheral interface module may be a keyboard, a click wheel, buttons or the like. The buttons may include, but not limited to, a home button, a volume button, a starting button and a locking button.

The sensor component 514 includes one or more sensors configured to provide status assessment in various aspects for the device 500. For instance, the sensor component 514 may detect an on/off status of the device 500 and relative positioning of components, such as a display and small keyboard of the device 500. The sensor component 514 may further detect a change in a position of the device 500 or a component of the device 500, presence or absence of contact between the user and the device 500, orientation or acceleration/deceleration of the device 500 and a change in temperature of the device 500. The sensor component 514 may include a proximity sensor configured to detect presence of an object nearby without any physical contact. The sensor component 514 may also include a light sensor, such as a Complementary Metal Oxide Semiconductor (CMOS) or Charge Coupled Device (CCD) image sensor, configured for use in an imaging application. In some embodiments not being part of the invention, the sensor component 514 may also include an acceleration sensor, a gyroscope sensor, a magnetic sensor, a pressure sensor or a temperature sensor.

The communication component 516 is configured to facilitate wired or wireless communication between the device 500 and another device. The device 500 may access a communication-standard-based wireless network, such as a Wireless Fidelity (WiFi) network, a 2nd-Generation (2G) or 3rd-Generation (3G) network or a combination thereof. In an exemplary embodiment not being part of the invention, the communication component 516 receives a broadcast signal or broadcast associated information from an external broadcast management system through a broadcast channel. In an exemplary embodiment not being part of the invention, the communication component 516 further includes a Near Field Communication (NFC) module to facilitate short-range communication. For example, the NFC module may be implemented on the basis of a Radio Frequency Identification (RFID) technology, an Infrared Data Association (IrDA) technology, an Ultra-WideBand (UWB) technology, a Bluetooth (BT) technology or another technology.

In an exemplary embodiment not being part of the invention, the device 500 may be implemented by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components that are configured to execute the abovementioned method.

In an exemplary embodiment, there is also provided a non-transitory computer-readable storage medium containing instructions, such as the memory 504 containing instructions, and the instructions may be executed by the processor 520 of the device 500 to implement the abovementioned method. For example, the non-transitory computer-readable storage medium may be a ROM, RAM, a Compact Disc Read-Only Memory (CD-ROM), a magnetic tape, a floppy disc, an optical data storage device and the like.

According to the non-transitory computer-readable storage medium, the instructions in the storage medium may be executed by a processor of a mobile terminal to enable the mobile terminal to execute the abovementioned information interaction methods.

Other embodiments of the present disclosure will be apparent to those skilled in the art from consideration of the specification and practice of the present disclosure. This application is intended to cover any variations, uses, or adaptations of the present disclosure following the general principles thereof and including such departures from the present disclosure as come within known or customary practice in the art. It is intended that the specification and examples be considered as exemplary only.

It will be appreciated that the present disclosure is not limited to the exact construction that has been described above and illustrated in the accompanying drawings, and that various modifications and changes may be made without departing from the scope of the appended claims.

## Claims

1. A method of enabling a meeting between a first party and a second party at a destination location, the method comprising:
acquiring, by a terminal of the first party, a destination location (101) and a preset geographical area range in the vicinity of the destination location covering a first area in which the first and second party are to meet;
displaying, on the terminal of the first party, an image of a destination landmark (102), being a building or monument located within the first area of the destination location; and
sending, by the terminal of the first party, the image of the destination landmark to the second party (103) through an instant messaging application;
wherein the image of the destination landmark further comprises a navigation link configured to automatically start a navigation application for navigation to the destination landmark when the second party clicks the image of the destination landmark (102); and
wherein displaying the image of the destination landmark (102) on the terminal of the first party comprises:
performing a calculation to select the destination landmark (102) according to each of a building or monument height, a building or monument area, a building or monument color, a building or monument photographing popularity and a network search popularity, the building or monument being located within the geographical area range in the vicinity of the destination location (101); and
acquiring, by the terminal of the first party, the image of the destination landmark (102) over a network, and displaying the image.

2. The method of claim 1, wherein acquiring the destination location (101) comprises:
receiving, by the terminal of the first party, an input from the first party indicating the destination location, or
querying, by the terminal of the first party, a messaging record of the first party, using text recognition, to identify the destination location.

3. The method of any preceding claim, further comprising:
acquiring, by the terminal of the first party, a geographical origin of the first party, and
planning route information from the geographical origin to the destination landmark;
estimating, by the terminal of the first party, travel time for travelling to the destination landmark according to the route information;
calculating, by the terminal of the first party, a departure time for the first party according to a set meeting time and the travel time; and
displaying, by the terminal of the first party, departure prompting information at the departure time, and starting route navigation to the destination landmark.

4. A user terminal configured to enable a meeting between a first party and a second party at a destination location, the user terminal comprising:
an acquisition module (301), configured to acquire a destination location and a preset geographical area range in the vicinity of the destination location covering a first area in which a first and second party are to meet;
a display module (302), configured to display an image of a destination landmark, being a building or monument located within the first area of the destination location; and
a sending module (303), configured to send the image of the destination landmark to the second party through an instant messaging application;
wherein the image of the destination landmark further comprises a navigation link configured to automatically start a navigation application for navigation to the destination landmark when the second party clicks the image of the destination landmark; and
wherein the display module (302) is configured to perform a calculation to obtain the destination landmark according to each of a building or monument height, a building or monument area, a building or monument color, a building or monument photographing popularity, and a network search popularity; the building or monument being located within the geographical area range in the vicinity of the destination location; and
wherein the display module (302) is configured to display the image of the destination landmark acquired over a network.

5. The user terminal of claim 4, wherein the acquisition module (301) is configured to receive an input from the first party indicating the destination location, or query a messaging record of the first party, using text recognition, to identify the destination location.

6. The user terminal of claim 4 or 5, further comprising: a planning module (304), a calculation module (305), a starting module (306), wherein
the acquisition module (301) is further configured to acquire a geographical origin of the first party;
the planning module (304) is configured to plan route information from the geographical origin to the destination landmark;
the calculation module (305) is configured to estimate travel time for travelling to the destination landmark according to the route information;
wherein the calculation module (305) is further configured to calculate a departure time for the first party according to a set meeting time and the travel time;
the display module (302) is further configured to display departure prompting information at the departure time; and
the starting module (306) is configured to start route navigation to the destination landmark.

7. A computer program including instructions that when executed on a computing device cause it to carry out the steps of the method according to any one of claims 1 to 3.

8. A non-transitory computer-readable storage medium having recorded thereon a computer program including instructions that when executed on a computing device cause it to carry out the steps of the method according to any one of claims 1 to 3.

## Patentansprüche

1. Verfahren zum Ermöglichen eines Treffens zwischen einem ersten Teilnehmer und einem zweiten Teilnehmer an einem Zielort, wobei das Verfahren Folgendes beinhaltet:
Erfassen, durch ein Endgerät des ersten Teilnehmers, eines Zielorts (101) und eines vorgegebenen Bereichs eines geographischen Gebiets in der Nähe des Zielorts, der ein erstes Gebiet, in dem sich der erste und der zweite Beteiligte treffen sollen, abdeckt;
Anzeigen, auf dem Endgerät des ersten Teilnehmers, eines Bilds einer Ziel-Landmarke (102), die ein Gebäude oder ein Denkmal ist, das sich innerhalb der ersten Gebiets des Zielorts befindet; und
Senden, durch das Endgerät des ersten Teilnehmers, des Bilds der Ziel-Landmarke an den zweiten Teilnehmer (103) durch eine Nachrichtensofortversand-Anwendung;
wobei das Bild der Ziel-Landmarke ferner einen Navigationslink beinhaltet, der konfiguriert ist zum automatischen Starten einer Navigationsanwendung zur Navigation zu der Ziel-Landmarke, wenn der zweite Beteiligte das Bild der Ziel-Landmarke (102) anklickt; and
wobei das Anzeigen des Bilds der Ziel-Landmarke (102) auf dem Endgerät des ersten Teilnehmers Folgendes beinhaltet:
Durchführen einer Berechnung zum Auswählen der Ziel-Landmarke (102) gemäß jedem von einer Gebäude- oder Denkmalhöhe, einem Gebäude- oder Denkmalgebiet, einer Gebäude- oder Denkmalfarbe, einer Beliebtheit des Gebäudes oder Denkmals als Fotomotiv und einem Gebäude- oder Denkmal-Netzwerksuchvolumen, wobei das Gebäude oder Denkmal sich innerhalb des Bereichs des geographischen Gebiets in der Nähe des Zielorts (101) befindet; und
Erfassen, durch das Endgerät des ersten Teilnehmers, des Bilds der Ziel-Landmarke (102) über ein Netzwerk und Anzeigen des Bilds.

2. Verfahren nach Anspruch 1, wobei das Erfassen des Zielorts (101) Folgendes beinhaltet:
Empfangen, durch das Endgerät des ersten Teilnehmers, einer Eingabe vom ersten Teilnehmer, die den Zielort angibt, oder
Abfragen, durch das Endgerät des ersten Teilnehmers, eines Nachrichtenverlaufs des ersten Teilnehmers unter Verwendung von Texterkennung, um den Zielort auszumachen.

3. Verfahren nach einem der vorhergehenden Ansprüche, das ferner Folgendes beinhaltet:
Erfassen, durch das Endgerät des ersten Teilnehmers, eines geographischen Ausgangspunkts des ersten Teilnehmers, und
Planen von Routeninformationen von dem geographischen Ausgangspunkt zur Ziel-Landmarke;
Schätzen, durch das Endgerät des ersten Teilnehmers, der Reisezeit für die Reise zur Ziel-Landmarke gemäß den Routeninformationen;
Berechnen, durch das Endgerät des ersten Teilnehmers, einer Aufbruchzeit für den ersten Teilnehmer gemäß einer festgelegten Treffzeit und der Reisezeit; und
Anzeigen, durch das Endgerät des ersten Teilnehmers, von zum Aufbruch auffordernden Informationen zur Aufbruchzeit und Starten der Routenführung zur Ziel-Landmarke.

4. Benutzerendgerät, das zum Ermöglichen eines Treffens zwischen einem ersten Teilnehmer und einem zweiten Teilnehmer an einem Zielort konfiguriert ist, wobei das Benutzerendgerät Folgendes beinhaltet:
ein Erfassungsmodul (301), das konfiguriert ist zum Erfassen eines Zielorts und eines vorgegebenen Bereichs eines geographischen Gebiets in der Nähe des Zielorts, der ein erstes Gebiet, in dem sich der erste und der zweite Beteiligte treffen sollen, abdeckt;
ein Anzeigemodul (302), das konfiguriert ist zum Anzeigen eines Bilds einer Ziel-Landmarke, die ein Gebäude oder ein Denkmal ist, das sich innerhalb des ersten Gebiets des Zielorts befindet; und
ein Sendemodul (303), das konfiguriert ist zum Senden des Bilds der Ziel-Landmarke an den zweiten Teilnehmer durch eine Nachrichtensofortversand-Anwendung;
wobei das Bild der Ziel-Landmarke ferner einen Navigationslink beinhaltet, der konfiguriert ist zum automatischen Starten einer Navigationsanwendung zur Navigation zu der Ziel-Landmarke, wenn der zweite Beteiligte das Bild der Ziel-Landmarke anklickt; and
wobei das Anzeigemodul (302) konfiguriert ist zum Durchführen einer Berechnung zum Ermitteln der Ziel-Landmarke gemäß jedem von einer Gebäude- oder Denkmalhöhe, einem Gebäude- oder Denkmalgebiet, einer Gebäude- oder Denkmalfarbe, einer Beliebtheit des Gebäudes oder Denkmals als Fotomotiv und dem Gebäude- oder Denkmal-Netzwerksuchvolumen; wobei das Gebäude oder Denkmal sich innerhalb des Bereichs des geographischen Gebiets in der Nähe des Zielorts befindet; und
wobei das Anzeigemodul (302) zum Anzeigen des über ein Netzwerk erfassten Bilds der Ziel-Landmarke konfiguriert ist.

5. Benutzerendgerät nach Anspruch 4, wobei das Erfassungsmodul (301) konfiguriert ist zum Empfangen einer Eingabe vom ersten Teilnehmer, die den Zielort angibt, oder Abfragen eines Nachrichtenverlaufs des ersten Teilnehmers unter Verwendung von Texterkennung, um den Zielort auszumachen.

6. Benutzerendgerät nach Anspruch 4 oder 5, das ferner Folgendes beinhaltet: ein Planungsmodul (304), ein Berechnungsmodul (305), ein Startmodul (306), wobei
das Erfassungsmodul (301) ferner zum Erfassen eines geographischen Ausgangspunkts des ersten Teilnehmers konfiguriert ist;
das Planungsmodul (304) zum Planen von Routeninformationen von dem geographischen Ausgangspunkt zur Ziel-Landmarke konfiguriert ist;
das Berechnungsmodul (305) zum Schätzen der Reisezeit für die Reise zur Ziel-Landmarke gemäß den Routeninformationen konfiguriert ist;
wobei das Berechnungsmodul (305) ferner konfiguriert ist zum Berechnen einer Aufbruchzeit für den ersten Teilnehmer gemäß einer festgelegten Treffzeit und der Reisezeit;
das Anzeigemodul (302) ferner konfiguriert ist zum Anzeigen von zum Aufbruch auffordernden Informationen zur Aufbruchzeit; und
das Startmodul (306) zum Starten der Routenführung zur Ziel-Landmarke konfiguriert ist.

7. Computerprogramm mit Anweisungen, die bei Ausführung auf einer Rechenvorrichtung diese zum Durchführen der Schritte des Verfahrens nach einem der Ansprüche 1 bis 3 veranlassen.

8. Nichtflüchtiges computerlesbares Speichermedium, auf dem ein Computerprogramm mit Anweisungen aufgezeichnet ist, die bei Ausführung auf einer Rechenvorrichtung diese zum Durchführen der Schritte des Verfahrens nach einem der Ansprüche 1 bis 3 veranlassen.

## Revendications

1. Procédé destiné à permettre une rencontre entre un premier correspondant et un deuxième correspondant à un lieu de destination, le procédé comprenant :
acquérir, par un terminal du premier correspondant, un lieu de destination (101) et une portée de zone géographique préréglée dans le voisinage du lieu de destination couvrant une première zone dans laquelle le premier et le deuxième correspondant doivent se rencontrer ;
afficher, sur le terminal du premier correspondant, une image d'un repère de destination (102), étant un bâtiment ou un monument situé dans la première zone du lieu de destination ; et
envoyer, par le terminal du premier correspondant, l'image du repère de destination au deuxième correspondant (103) par une application de messagerie instantanée ;
dans lequel l'image du repère de destination comprend en outre un lien de navigation configuré pour commencer automatiquement une application de navigation pour navigation au repère de destination lorsque le deuxième correspondant clique sur l'image du repère de destination (102) ; et
dans lequel afficher l'image du repère de destination (102) sur le terminal du premier correspondant comprend :
effectuer un calcul pour sélectionner le repère de destination (102) conformément à chacune d'entre une hauteur du bâtiment ou monument, une zone du bâtiment ou monument, une couleur du bâtiment ou monument, une popularité de photographier le bâtiment ou monument et une popularité de recherche réseau, le bâtiment ou monument étant situé dans la portée de la zone géographique dans le voisinage du lieu de destination (101) ; et
acquérir, par le terminal du premier correspondant, l'image du repère de destination (102) sur un réseau et afficher l'image.

2. Procédé selon la revendication 1, dans lequel acquérir le lieu de destination (101) comprend :
recevoir, par le terminal du premier correspondant, une entrée du premier correspondant indiquant le lieu de destination, ou
interroger, par le terminal du premier correspondant, une enregistrement de messagerie du premier correspondant, en utilisant la reconnaissance de texte, pour identifier le lieu de destination.

3. Procédé selon l'une quelconque des revendications précédentes, comprenant en outre :
acquérir, par le terminal du premier correspondant, une origine géographique du premier correspondant, et planifier des informations d'itinéraire de l'origine géographique jusqu'au repère de destination ;
estimer, par le terminal du premier correspondant, un temps de trajet pour se rendre au repère de destination conformément aux informations d'itinéraire ;
calculer, par le terminal du premier correspondant, une heure de départ pour le premier correspondant conformément à une heure de rencontre réglée et au temps de trajet ; et
afficher, par le terminal du premier correspondant, des informations d'invite de départ à l'heure de départ et commencer à naviguer l'itinéraire jusqu'au repère de destination.

4. Terminal utilisateur pour permettre une rencontre entre un premier correspondant et un deuxième correspondant à un lieu de destination, le terminal utilisateur comprenant :
un module d'acquisition (301) configuré pour acquérir un repère de destination et une portée de zone géographique préréglée dans le voisinage du lieu de destination couvrant une première zone dans laquelle le premier et le deuxième correspondant doivent se rencontrer ;
un module d'affichage (302), configuré pour afficher une image du repère de destination, étant un bâtiment ou un monument situé dans la première zone du lieu de destination ; et
un module d'envoi (303) configuré pour envoyer l'image du lieu de destination au deuxième correspondant par une application de messagerie instantanée ;
dans lequel l'image du repère de destination comprend en outre un lien de navigation configuré pour commencer automatiquement une application de navigation pour navigation au repère de destination lorsque le deuxième correspondant clique sur l'image du repère de destination ; et
dans lequel le module d'affichage (302) est configuré pour effectuer un calcul afin d'obtenir le repère de destination conformément à chacune d'entre une hauteur du bâtiment ou monument, une zone du bâtiment ou monument, une couleur du bâtiment ou monument, une popularité de photographier le bâtiment ou monument et une popularité de recherche réseau ; le bâtiment ou monument étant situé dans la portée de la zone géographique dans le voisinage du lieu de destination ; et
dans lequel le module d'affichage (302) est configuré pour afficher l'image du repère de destination acquise sur un réseau.

5. Terminal utilisateur selon la revendication 4, dans lequel le module d'acquisition (301) est configuré pour recevoir une entrée du premier correspondant indiquant le lieu de destination, ou interroger un enregistrement de messagerie du premier correspondant, en utilisant la reconnaissance de texte, pour identifier le lieu de destination.

6. Terminal utilisateur selon la revendication 4 ou 5, comprenant en outre : un module de planification (304), un module de calcul (305), un module de commencement (306), dans lequel
le module d'acquisition (301) est configuré en outre pour acquérir une origine géographique du premier correspondant;
le module de planification (304) est configuré pour planifier des informations d'itinéraire de l'origine géographique jusqu'au repère de destination ;
le module de calcul (305) est configuré pour estimer un temps de trajet pour se rendre au repère de destination conformément aux informations d'itinéraire ;
dans lequel le module de calcul (305) est configuré en outre pour calculer une heure de départ pour le premier correspondant conformément à une heure de rencontre réglée et au temps de trajet ;
le module d'affichage (302) est configuré en outre pour afficher une information d'invite de départ à l'heure de départ ; et
le module de commencement (306) est configuré pour commencer à naviguer l'itinéraire jusqu'au repère de destination.

7. Programme informatique comprenant des instructions qui lorsque exécutées sur un dispositif informatique font qu'il met en oeuvre les étapes du procédé selon l'une quelconque des revendications 1 à 3.

8. Support de stockage non transitoire lisible par ordinateur ayant un programme informatique stocké dessus comprenant des instructions qui lorsque exécutées sur un dispositif informatique font qu'il met en oeuvre les étapes du procédé selon l'une quelconque des revendications 1 à 3.
